# EUROPÄISCHE PATENTSCHRIFT

(11) **EP 0 666 999 B1**
(45) Veröffentlichungstag und Bekanntmachung des Hinweises auf die Patenterteilung: **21.01.1998**
(21) Anmeldenummer: 93918994.0
(22) Anmeldetag: 15.09.1993
(51) Int. Cl.: G02B 21/14

(54) **VORRICHTUNG ZUR KONTRASTIERUNG MIKROSKOPISCH ZU UNTERSUCHENDER OBJEKTE**
DEVICE FOR CONTRASTING OBJECTS TO BE MICROSCOPICALLY EXAMINED
DISPOSITIF PERMETTANT DE CONTRASTER DES OBJETS A EXAMINER AU MICROSCOPE

(30) Priorität: 30.10.1992 DE 4236803
(43) Veröffentlichungstag der Anmeldung: 16.08.1995
(73) Patentinhaber: LEICA MIKROSKOPIE UND SYSTEME GmbH, D-35530 Wetzlar (DE)
(72) Erfinder: STANKEWITZ, Hans-Werner, D-35579 Wetzlar (DE)
(74) Vertreter: Stamer, Harald, Dipl.-Phys.
(86) Internationale Anmeldenummer: DE9300858
(87) Internationale Veröffentlichungsnummer: WO9410597

(56) Entgegenhaltungen:
- DE-A- 1 963 604
- GB-A- 673 861
- IBM TECHNICAL DISCLOSURE BULLETIN. Bd. 22, Nr. 11 , April 1980 , NEW YORK US Seite 5085 E. COURTENS ET AL. 'Microscope attachment for improved visibility of weak phase objects'
- JOURNAL OF THE OPTICAL SOCIETY OF AMERICA Bd. 9, Nr. 6 , Juni 1992 , NEW YORK US Seiten 924 - 931 T. NODA ET AL. 'Separation of phase and absorption images in phase-contrast microscopy'

## Beschreibung

Die Erfindung betrifft eine Vorrichtung zur Durchführung eines optischen Kontrastierungsverfahren für mikroskopisch zu untersuchende Amplituden-und/oder Phasenobjekte.

Für die mikroskopische Untersuchung von Objekten, insbesondere von lebenden, ungefärbten Zell- und Gewebematerialien oder von farblosen, transparenten Materialien mit Objektbereichen unterschiedlicher optischer Dicke sind Kontrastverfahren erforderlich, mit deren Hilfe für das menschliche Auge eine bessere Erkennbarkeit von Objektstrukturen erreicht werden kann.

So ist es beispielsweise bekannt, im Beleuchtungstrakt eines Mikroskops eine "schiefe Beleuchtung" dadurch zu erzielen, daß die Aperturblende aus der optischen (Beleuchtungs-)Achse exzentrisch verschoben wird. Die Nachteile dieser bekannten Kontrastierungsverfahren bestehen darin, daß sie schlecht reproduzierbar, nicht kostengünstig zu realisieren und für jedes Objektiv neu einzustellen sind.

Ein weiteres bekanntes Verfahren ist das Phasenkontrastverfahren. Dabei werden durch Einbringen geeigneter optischer Mittel in die hintere Brennebene des Objektivs Kontrasteffekte erzeugt. Da reine Phasenobjekte nur die Phase und nicht die Amplitude des Lichtes ändern, das menschliche Auge bzw. die fotografische Platte wohl auf Amplituden-, nicht aber auf Phasen-Unterschiede anspricht, bleiben sie im normalen Hellfeldbild unsichtbar. Mit dem bekannten Phasenkontrastverfahren werden die durch das (Phasen-)Objekt hervorgerufenen Phasenunterschiede in Amplitudenunterschiede "umgewandelt" und damit sichtbar gemacht. Zernike erkannte bereits, daß man nur die Phase des Beleuchtungslichtes um λ/4 ändern muß, um den Unterschied zwischen einem Phasenobjekt und einem Amplitudenobjekt aufzuheben, d. h. Phasenstrukturen genau wie Amplitudenstrukturen sichtbar zu machen. In der Praxis benutzt man ein ringförmiges Plättchen, den sog. "Phasenring", der in der hinteren Brennebene des Objektivs positioniert wird. Der Phasenring weist eine definierte Dicke und Absorption auf. Die Anwendung eines Phasenrings setzt voraus, daß das Beleuchtungslicht von einer ringförmigen Lichtquelle herkommt. Dies wird konstruktiv durch eine im Bereich des Kondensors angebrachte Blende erreicht. Da der Durchmesser und die Breite dieser Blende die Beleuchtungsapertur beeinflussen, die zur Objektivapertur in einem bestimmten Verhältnis stehen muß, enthält ein bekannter Phasenkontrast-Kondensor mehrere zu den Objektiven konjugierte Ringblenden, die beispielweise auf einer Revolverscheibe angeordnet sind. Die Nachteile bestehen also darin, daß für jedes Mikroskopobjektiv eine speziell gestaltete Ringblende vorhanden und in Wirkstellung gebracht werden muß. Außerdem ist kein "Reliefeffekt" erzielbar und schließlich treten beispielsweise bei der Untersuchung von Flüssigkeitskammern Störungen des Verfahrens auf.

Aus der GB-A-673 861 ist darüber hinaus ein Phasenkontrast-Mikroskop bekannt, das eine aus mehreren Sektoren bestehende Phasenplatte enthält, welche mit einer entsprechenden Sektorblende (,,phase diaphragm") korreliert ist, die opake und transparente Sektoren aufweist.

Weitere bekannte Kontrastierungsverfahren betreffen den Modulationskontrast nach Hoffman. Nachteilig ist der hohe Fertigungsaufwand, da Spezialobjektive verwandt werden müssen, die nicht rotationssymmetrisch sind. Darüber hinaus ist dieses Verfahren schwer zu handhaben.

Schließlich ist das Interferenzkontrast-Verfahren zu nennen, das aber auf der Verwendung von optischen Polarisations-Bauteilen komplizierter kristalloptischer Orientierungen beruht, wodurch es fertigungstechnisch sehr aufwendig und damit kostenintensiv ist. Außerdem können mit diesem bekannten Verfahren keine Objekte untersucht werden, die sich beispielweise in Kunststoff-Präparatbehältern befinden, da Kunststoffmaterialien die Polarisationszustände beeinflussen.

Es ist daher die Aufgabe der vorliegenden Erfindung, die Nachteile der bekannten Vorrichtung zu vermeiden und eine Vorrichtung für ein kombiniertes optisches Kontrastierungsverfahren anzugeben, das bei einfacher Bedienung eine größere Anwendungsbreite für alle infrage kommenden Objekte ermöglicht, wobei neben einer Phasenkontrastierung zusätzlich eine Reliefkontrastierung erfolgt. Die Aufgabe besteht weiterhin darin, eine entsprechende Vorrichtung anzugeben, bei der keine polarisations-optischen Bauteile verwendet werden.

Die Aufgabe wird bei einer Vorrichtung der eingangs genannten Art erfindungsgemäß durch das kennzeichnende Merkmal des Hauptanspruchs gelöst.

Vorteilhafte Ausgestaltungen ergeben sich aus den Unteransprüchen.

Die Erfindung wird nunmehr anhand der Figuren näher erläutert. Es zeigen
- Fig. 1a:: eine schematische Darstellung eines Teils des Beleuchtungs- und Abbildungsstrahlengangs eines Mikroskops;
- Fig. 1b:: eine Draufsicht einer erfindungsgemäßen Sektorblende;
- Fig. 1c:: eine Draufsicht einer erfindungsgemäßen Phasenplatte;
- Fig. 2:: das Bild der Sektorblende am Ort der erfindungs gemäßen Phasenplatte mit azimutal korrekt orientiertem Phasensegment.

In Fig. 1a ist ein Teil eines Beleuchtungs- und Abbildungsstrahlengangs in einem Mikroskop schematisch dargestellt. Das Beleuchtungsstrahlenbündel, dessen Achse mit der optischen Achse 5 zusammenfällt, geht von einer Lichtquelle L aus und passiert nach Durchtritt durch einen Kollektor 1 zunächst eine als Irisblende ausgebildete Aperturblende A, sodann einen Kondensor 2 und trifft anschließend auf ein zu mikroskopierendes Durchlicht-Objekt, das in der Figur als Präparat P bezeichnet ist. Genauer gesagt, handelt es sich bei P um einen Präparatträger, beispielweise ein planparalleles Objektgläschen, auf dessen zentralem, von der optischen Achse 5 durchstoßenem Flächenbereich sich das eigentliche Präparat in der Objektebene O befindet. Dieses Präparat kann ein reines Amplitudenobjekt oder ein reines Phasenobjekt oder eine Mischform beider Objektkategorien sein. Nach Verlassen des Objektes tritt das Beleuchtungs- bzw. Abbildungsstrahlenbündel durch ein Objektiv 3, und sodann durch eine Tubuslinse 4. Dieser optisch-geometrische Aufbau ist an sich bekannt.

Die Fig. 1a entspricht insoweit einer Köhler'schen Beleuchtungsanordnung. Es sei aber an dieser Stelle hervorgehoben, daß auch andere Beleuchtungsanordnungen, beispielweise eine sog. "kritische Beleuchtung", Basis für die konstruktive Anordnung der erforderlichen optischen Einzelbauteile sein können.

Mit L' ist die vordere Brennebene des Kondensors 2 bezeichnet; sie wird auch "Eintrittspupille" des Kondensors 2 genannt. Die bereits erwähnte Aperturblende A befindet sich in oder in unmittelbarer Nähe der Kondensor-Eintrittspupille. Mit L" ist die hintere Brennebene des Objektivs 3 bezeichnet; sie wird auch "Austrittspupille" des Objektivs 3 genannt. Mit Z ist eine Zwischenbildebene bezeichnet, wobei die Ebenen L', O, L" und Z konjugierte Ebenen darstellen. Ein Mikroskop-Okular (bzw. eine Mattscheibe bzw. ein Bildschirm) vervollständigt das Beleuchtungs- bzw. Abbildungssystem. Es wurde aus Vereinfachungsgründen jedoch nicht zeichnerisch dargestellt.

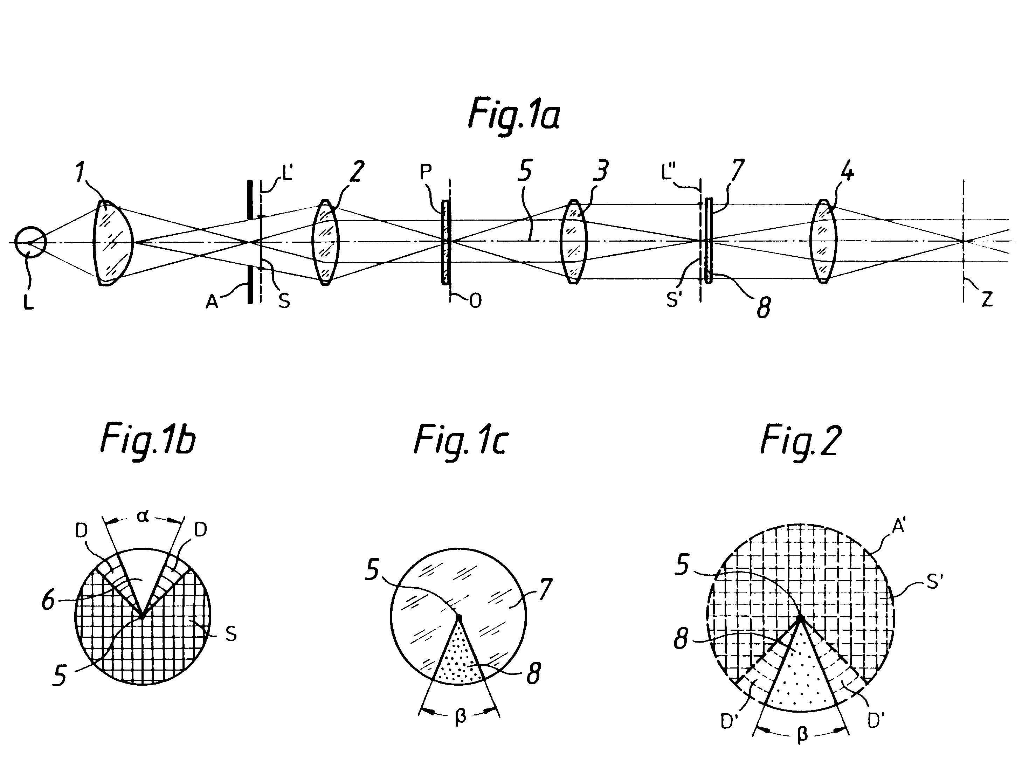

In der vorderen Brennebene L' des Kondensors befindet sich - wie in Fig. 1b dargestellt - die erfindungsgemäße Sektorblende S. Fig. 1 b zeigt im Vergleich zur Fig. 1a eine in die Zeichenebene umgeklappte Blende. Die Spur der optischen Achse 5 stellt den Kreismittelpunkt dar. Die Sektorblende 5 weist einen Kreisausschnitt - also einen (Kreis-)"Sektor" 6 - auf, dessen Winkel mit α bezeichnet ist. Zu beiden Seiten des Sektors 6 befinden sich im dargestellten Fall zwei symmetrisch angeordnete Dämpfungssektoren D. Auf dessen Bedeutung wird weiter unten noch näher einzugehen sein. Prinzipiell kann die erfindungsgemäße Sektorblende S ohne die zusätzlichen Dämpfungs-Sektoren D gefertigt sein. In diesem Fall besteht sie also lediglich aus einer Kreisscheibe aus opakem Material, die - wie bereits erwähnt - einen kreissektorförmigen Ausschnitt 6 mit einem Winkel α aufweist.

In der hinteren Brennebene L" des Objektivs 3 bzw. in dessen unmittelbarer Nähe befindet sich außerdem eine erfindungsgemäß strukturierte Phasenplatte 7.

Sie ist in Fig. 1c - wiederum um 90 Grad in die Zeichenebene umgeklappt - dargestellt. Sie besteht aus einer kreisförmigen planparallelen Scheibe aus transparentem Material (z.B. Glas) und weist einen kreissektorförmigen Bereich auf, der als Phasensegment 8 bezeichnet wird. Der Sektorwinkel ist mit β angegeben. Der Phasenbelag ist an sich bekannt. Es kann sich beispielweise um einen MgF₂-Schichtbelag handeln, wie er auch bei den bekannten Phasenringen verwendet wird. Durch dieses Phasensegment 8 wird das durchgehende Strahlenbündel hinsichtlich seiner Phasenlage und hinsichtlich seiner Intensität gezielt beeinflußt. Die Gesamtanordnung kann so getroffen sein, daß das Bild des Kreisausschnitts 6 hinsichtlich seiner Fläche und seines Winkels α mit der Fläche und dem Winkel β des Phasensegments 8 übereinstimmt. Es ist indes auch möglich, daß das Phasensegment 8 kleiner oder größer als das Bild des Kreisausschnitts 6 ist. Außerdem ist es möglich, daß die azimutale Orientierung der Phasenplatte 7 derart getroffen ist, daß das Phasensegment 8 nicht symmetrisch im Ausschnitt des Bildes S' zu liegen kommt.

Zur näheren Veranschaulichung sei auf Fig. 2 verwiesen. Sie zeigt - in etwas größerem Maßstab als bei den Figuren 1b und 1c - das in der hinteren Brennebene L" entworfene Bild A' der Aperturblende A, vgl. die strichlinierte Kreislinie A'. Da sich am Ort der hinteren Brennebene L" auch die Phasenplatte 7 mit ihrem Phasensegment 8 befindet, ist dieses Segment 8 mit seinem Sektorwinkel β in Punkt-Schraffur dargestellt. Mit der durchbrochenen Netz-Schraffur ist das Bild S' der Sektorblende S dargestellt. Wie weiter oben bereits erwähnt, kann man sich zunächst in Fig. 2 die beiden mit D bezeichneten Sektorbereiche wegdenken.

Wenn man nun beispielweise eine Sektorblende S mit einem relativ großen Sektor 6 verwendet und gleichzeitig eine Phasenplatte 7 mit einem relativ kleinen Sektor des Phasensegments 8, so daß α > β gilt, so wird bei einer Darstellung gemäß Fig. 2 das Phasensegment 8 innerhalb des - größeren - Kreisausschnitts-Bildes zu liegen kommen. Das bedeutet, daß - bei angenommener symmetrischer Positionierung - zu beiden Seiten des Phasensegments 8 zwei freie, helle, sektorförmige Bereiche auftreten. Natürlich ist auch eine unsymmetrische Positionierung des Phasensegments 8 bezüglich des Kreisausschnitts-Bildes möglich; in einem solchen Fall wird der helle Sektorteil auf der einen Seite des Phasensegments größer sein (also einen größeren Winkel haben), als derjenige auf der anderen Seite des Phasensegments. Bei extrem asymmetrischer Positionierung infolge einer entsprechenden azimutalen Verdrehung der Phasenplatte 7 ist es natürlich auch möglich, daß das Phasensegment 8 nur an einer Seite des Kreisausschnitts des Bildes S' einen hellen Sektorteil freiläßt.

Um in derartigen Fällen in der Ebene L" zu starke Überstrahlungen durch die beiden hellen Sektorteile abzumildern, also zu "dämpfen", kann die Sektorblende zusätzlich mit Dämpfungs-Sektoren D ausgestattet sein (vgl. Fig. 1 b), die aus transparentem Material definierter Durchlässigkeit bestehen. Dabei kann es sich beispielsweise um Grau- oder Farbfilter handeln. Hinsichtlich des Dämpfungs-Grades (Lichtschwächungs-Grades) sind sie beispielsweise demjenigen des Phasensegments 8 angepaßt. Der Lichtschwächungs-Faktor beträgt bei einer Ausführungsform der vorliegenden Erfindung beispielsweise 15%.

Diese wahlweise Zusatzausstattung der an sich opaken Sektorblende S mit zwei semi-transparenten Sektoren D zu beiden Seiten der kreissektorförmigen Öffnung 6 liefert das in Fig. 2 gezeigte Bild (mit überlagertem Phasensegment 8). Mit D' ist das Bild beider Dämpfungs-Sektoren D bezeichnet. Nach einer besonders bevorzugten Ausführungsform der vorliegenden Erfindung ist die geometrische Sektorblende derart dimensioniert, daß 5/6 (fünf Sechstel) der Kondensorpupille ausgeblendet werden.

Dadurch, daß es sich bei der Sektorblende S um einen "Kreisausschnitt" 6 handelt, der per definitionem bis zum Mittelpunkt des Kreises (= Spur der optischen Achse 5) reicht, ist sie unabhängig von den Brennweiten des jeweiligen Kondensors bzw. Objektivs. Die Anwendung ist so unempfindlich gegenüber Pupillenschwankungen, daß das Phasensegment 8 auch in einem mittleren Wert der konjugierten Objektpupille angebracht werden kann. Hieraus ergibt sich als gravierender Vorteil, daß normale Objektive unterschiedlicher Brennweiten und Pupillenlagen verwendet werden können.

Wenngleich die erfindungsgemäße Vorrichtung anhand eines Durchlicht-Strahlengangs erläutert wurde, so sind auch in entsprechender Weise Auflichtanordnungen mit der erfindungsgemäßen Sektorblenden-Phasensegment-Kombination ausrüstbar. Diese kombinierte Relief- und Phasen-Kontrastierungsvorrichtung ist darüber hinaus auch für Invers-Mikroskop-Strahlenführungen im Durchlicht- und/oder Auflicht anwendbar.

## Patentansprüche

1. Vorrichtung zur Durchführung eines Kontrastierungsverfahrens für mikroskopisch zu untersuchende Amplituden- und/oder Phasenobjekte zur Erzielung eines Reliefkontrastes im mikroskopischen Bild, wobei eine partielle, bezüglich der optischen Achse (5) asymmetrische Ausblendung der Eintrittspupille (L') eines Kondensors (2) mittels einer Sektorblende (S) erfolgt und das in der Austrittspupille (L") eines Objektivs (3) erzeugte Bild (S') dieser Sektorblende (S) von einem bezüglich der optischen Achse (5) asymmetrischen, sektorförmigen Phasensegment (8) zumindest teilweise abgedeckt wird, wobei die Vorrichtung eine eine Lichtquelle (L), einen Kollektor (1), eine Aperturblende (A), einen Kondensor (2), ein Objektiv (3) und - gegebenenfalls - eine Tubuslinse (4) aufweisende Mikroskopanordnung für das zwischen dem Kondensor (2) und dem Objektiv (3) befindliche Amplituden- und/oder Phasenobjekt (P) zur Reliefkontrastierung des Objektbildes enthält, bei der in der vorderen Brennebene (L') des Kondensors (2) eine Sektorblende (S) vorgesehen ist, die aus einer kreisförmigen Blende mit einer sektorförmigen Öffnung (6) mit einem Öffnungswinkel a besteht, und in der hinteren Brennebene (L") des Objektivs (3) eine ein sektorförmiges Phasensegment (8) mit einem Sektorwinkel β aufweisende Phasenplatte (7) vorgesehen und derart azimutal positioniert ist, daß das Phasensegment (8) das an diesem Ort entstehende Bild (S') der sektorförmigen Blendenöffnung (6) zumindest teilweise überlagert,
**dadurch gekennzeichnet,**
daß die Sektorblende (S) mit wenigstens einem an die sektorförmige Öffnung (6) angrenzenden transparenten Sektorbereich (D) ausgestattet ist, der eine definierte Schwächung der Intensität des Beleuchtungsstrahlenbündels bewirkt und dessen Abbildung(en) (D') auf die die Phasenplatte (7) nicht von dem Phasensegment (8) abgedeckt wird (werden).

2. Vorrichtung nach Anspruch 1, **dadurch gekennzeichnet,** daß der Grad der Schwächung der Intensität des Beleuchtungsstrahlenbündels demjenigen des Phasensegments (8) angepaßt ist.

3. Vorrichtung nach Anspruch 2, **dadurch gekennzeichnet,** daß der Grad der Schwächung der Intensität des Beleuchtungsstrahlenbündels bei dem/den Dämpfungs-Sektor(en) (D) wie auch bei dem Phasensegment (8) 15 % beträgt unter der zusätzlichen Bedingung, daß die Flächengröße des Phasensegments (8) der Flächengröße des/der Dämpfungs-Sektors/Sektoren (D) entspricht.

## Claims

1. Device for carrying out a contrast method for amplitude and/or phase objects, which are to be inspected microscopically, for the attainment of a contrast in relief in the microscopic image, wherein a partial masking, which is asymmetric with respect to the optical axis (6), of the entry pupil (L') of a condenser (2) is effected by means of a sector light stop (S) and the image (S'), which is produced in the exit pupil (L") of an objective (3), of this sector light stop (S) is at least partly covered by a sector-shaped phase segment (8) which is asymmetric with respect to the optical axis (5), wherein the device comprises a microscope arrangement, which comprises a light source (L), a collector (1), an aperture light stop (A), a condenser (2), an objective (3) and, optionally also, a tubus lens (4), for the amplitude and/or phase object (P), which is disposed between the condenser (2) and the objective (3), for relief contrasting of the object image, in which a sector light stop (S), which consists of a circular light stop with a sector-shaped opening (6) with an opening angle a, is provided in the front focal plane (L') of the condenser (2) and a phase plate (7) having a sector-shaped phase segment (8) with a sector angle β is provided in the rear focal plane (L") of the objective (3) and is positioned in azimuth in such a manner that the phase segment (8) at least partly overlies the image (S'), which is formed at this location, of the sector-shaped light stop opening, characterised thereby that the sensor light stop (S) is provided with at least one transparent sector region (D) which adjoins the sector-shaped opening (6) and produces a defined attenuation of the intensity of the illuminating beam and the image or images (D') of which on the phase plate (7) is or are not covered by the phase segment (8).

2. Device according to claim 1, characterised thereby that the degree of attenuation of the intensity of the illuminating beam is matched to that of the phase segment (8).

3. Device according to claim 2, characterised thereby that the degree of attenuation of the intensity of the illuminating beam at the damping sector or sectors (D) as also at the phase segment (8) amounts to 15% subject to the additional condition that the area size of the phase segment (8) corresponds with the area size of the damping sector or sectors (D).

## Revendications

1. Dispositif pour la mise en oeuvre d'un procédé d'amélioration du contraste pour des objets de phase et/ou d'amplitude à examiner au microscope pour l'obtention d'un contraste avec relief dans l'image du microscope, où il se produit une obturation partielle symétrique relativement à l'axe optique (5) de la pupille d'entrée (L') d'un condenseur (2) au moyen d'un diaphragme à secteurs (S) et en ce que l'image produite dans la pupille de sortie (L") d'un objectif (3) de ce diaphragme à secteurs est recouverte au moins partiellement par un segment de phase (8) en forme de secteur, symétrique par rapport à l'axe optique (5), où le dispositif contient un agencement à microscope présentant une source de lumière (L), un collecteur (1), un diaphragme à ouverture (A), un condenseur (2), un objectif (3) et, le cas échéant, une lentille tubulaire (4) pour l'objet d'amplitude et/ou de phase (P) se trouvant entre le condenseur (2) et l'objectif (3), pour l'amélioration du contraste de relief de l'image de l'objet, dans lequel, dans le plan focal avant (L') du condenseur (2) est prévu un diaphragme à secteurs (S) qui se compose d'un diaphragme circulaire avec une ouverture en secteur (6) avec un angle d'ouverture a et, dans le plan focal arrière (L") de l'objectif (3), est prévue une plaque de phase (7) présentant un segment de phase en forme de secteur (8) avec un angle de secteur β et qui est positionnée de façon azimutale de manière que le segment de phase (8) recouvre au moins partiellement l'image (S') résultant en cet emplacement de l'ouverture du diaphragme (6) en forme de secteur,
caractérisé en ce que,
le diaphragme à secteurs (6) est équipé d'au moins une zone de secteur (D) transparente, délimitant l'ouverture (6) en forme de secteur, qui a pour effet un affaiblissement défini de l'intensité du faisceau de rayons d'éclairement et dont la ou les reproductions (D') sur la plaque de phase (7) n'est ou ne sont pas recouvertes par le segment de phase (8).

2. Dispositif selon la revendication 1, caractérisé en ce que le degré d'affaiblissement de l'intensité du faisceau de rayons d'éclairement est adapté à celui du segment de phase (8).

3. Dispositif selon la revendication 2, caractérisé en ce que le degré d'affaiblissement de l'intensité du faisceau de rayons d'éclairement dans le cas du ou des secteurs d'amortissement (D) et également dans le cas du segment de phase (8), est de 15 % avec la condition supplémentaire que la grandeur de la surface du segment de phase (8) corresponde à la grandeur de la surface du ou des secteurs d'amortissement (D).
